(19) Europäisches Patentamt
European Patent Office
Office européen des brevets

(11) **EP 2 187 356 A1**

(12) **EUROPEAN PATENT APPLICATION**
published in accordance with Art. 153(4) EPC

(43) Date of publication:
**19.05.2010 Bulletin 2010/20**

(51) Int Cl.:
***G06T 17/40*** *(2006.01)*    ***A63F 13/00*** *(2006.01)*

(21) Application number: **08704449.1**

(22) Date of filing: **05.02.2008**

(86) International application number:
**PCT/JP2008/051822**

(87) International publication number:
**WO 2009/019899 (12.02.2009 Gazette 2009/07)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **08.08.2007 JP 2007207254**

(71) Applicant: **Konami Digital Entertainment Co., Ltd. Tokyo 107-8324 (JP)**

(72) Inventors:
• **SHIN, Hideyuki Tokyo 107-8324 (JP)**
• **OKUBO, Takeshi Tokyo 107-8324 (JP)**

(74) Representative: **Winter, Brandl, Fürniss, Hübner Röss, Kaiser, Polte Partnerschaft Patent- und Rechtsanwaltskanzlei Alois-Steinecker-Strasse 22 85354 Freising (DE)**

(54) **GAME DEVICE, GAME DEVICE CONTROL METHOD, PROGRAM AND INFORMATION MEMORY MEDIUM**

(57)    Provided is a game device which is capable of showing how a peripheral part of an eye of a character object changes according to a viewing direction of the character object, while reducing a data amount and an amount of a work for producing data. A plurality of pieces of vertex position specifying data (data for specifying positions of vertexes of the peripheral part of the eye) corresponding to a plurality of basic viewing directions and blend control data (data associating viewing direction information with blend ratio information of the plurality of pieces of vertex position specifying data) are stored. The blend ratio information corresponding to a viewing direction is acquired based on the blend control data (S108). The plurality of pieces of vertex position specifying data are blended based on the blend ratio information to thereby acquire the vertex position specifying data corresponding to the viewing direction (S109). A game screen is displayed based on the vertex position specifying data corresponding to the viewing direction (S113).

FIG.14

**Description**

TECHNICAL FIELD

The present invention relates to a game device, a game device control method, a program, and an information storage medium.

BACKGROUND ART

There is known a game device which displays a virtual three-dimensional space in which a character object is placed on a game screen. Conventionally, such a game device employs a method of changing the position of an eyeball of a character object according to the viewing direction of the character object, as a method of representing the direction in which the character object is looking.

DISCLOSURE OF THE INVENTION

Problems to be Solved by the Invention

However, when a person is looking in one direction, changes occur not only in the positions of the eyeballs but also in the peripheral parts of the eyes. For example, a wrinkle occurs on the skin surrounding the eyes. For this reason, the method of changing only the position of an eyeball as described above may give a user an impression that the peripheral part of the eye of a character object is unnatural.
As a method of suppressing occurrence of the above-mentioned drawback, there may be conceived a method of preparing, beforehand, data (motion data or animation data) which shows how the peripheral part of an eye of a character object changes according to the viewing direction of the character object, and changing the peripheral part of the eye of the character object according to the data. However, the viewing direction of a character object is not restricted to a fixed direction but varies, and hence the use of this method requires a vast amount of data described above. That is, the amount of data and the amount of a work of producing data increase.
The present invention has been made in light of the foregoing problem, and it is an object of the present invention to provide a game device, a game device control method, a program, and an information storage medium, which are capable of showing how a peripheral part of an eye of a character object changes according to a viewing direction of the character object while reducing an amount of data and an amount of a work for producing data. Means for Solving the Problems
In order to solve the above-mentioned problem, according to the present invention, a game device, which displays a virtual three-dimensional space in which a character object is placed on a game screen, is characterized by including: vertex position specifying data storage means for storing a plurality of pieces of vertex position specifying data corresponding to a plurality of basic viewing directions, the vertex position specifying data specifying positions of vertexes of a peripheral part of an eye of the character object; blend control data storage means for storing blend control data associating viewing direction information about a viewing direction of the character object with blend ratio information about a blend ratio of the plurality of pieces of vertex position specifying data; viewing direction acquisition means for acquiring the viewing direction of the character object; blend ratio information acquisition means for acquiring the blend ratio information corresponding to the viewing direction of the character object, which is acquired by the viewing direction acquisition means, based on the blend control data; vertex position specifying data acquisition means for blending the plurality of pieces of vertex position specifying data based on the blend ratio information acquired by the blend ratio information acquisition means, to thereby acquire the vertex position specifying data corresponding to the viewing direction of the character object acquired by the viewing direction acquisition means; and display control means for displaying the game screen based on the vertex position specifying data, which corresponds to the viewing direction of the character object acquired by the viewing direction acquisition means, acquired by the vertex position specifying data acquisition means.
Further, according to the present invention, a control method for a game device, which displays a virtual three-dimensional space in which a character object is placed on a game screen, is characterized by including: a step of reading storage content of vertex position specifying data storage means storing a plurality of pieces of vertex position specifying data corresponding to a plurality of basic viewing directions, the vertex position specifying data specifying positions of vertexes of a peripheral part of an eye of the character object; a step of reading storage content of blend control data storage means storing blend control data associating viewing direction information about a viewing direction of the character object with blend ratio information about a blend ratio of the plurality of pieces of vertex position specifying data; a viewing direction acquisition step of acquiring the viewing direction of the character object; a blend ratio information acquisition step of acquiring the blend ratio information corresponding to the viewing direction of the character object, which is acquired in the viewing direction acquisition step, based on the blend control data; a vertex position specifying data acquisition step of blending the plurality of pieces of vertex position specifying data based on the blend ratio information acquired in the blend ratio information acquisition step, to thereby acquire the vertex position specifying data corresponding to the viewing direction of the character object acquired in the viewing direction acquisition step; and a display control step of displaying the game screen based on the vertex position specifying data, which corresponds to the viewing direction of the character obj ect acquired in the viewing direction acquisition step, acquired in the vertex position specifying data acquisition step.

Further, a program according to the present invention causes a computer such as a consumer game machine, a portable game machine, an arcade game machine, a mobile phone, a personal digital assistant (PDA), or a personal computer to function as a game device which displays a virtual three-dimensional space in which a character object is placed on a game screen, and further causes the computer to function as: vertex position specifying data storage means for storing a plurality of pieces of vertex position specifying data corresponding to a plurality of basic viewing directions, the vertex position specifying data specifying positions of vertexes of a peripheral part of an eye of the character object; blend control data storage means for storing blend control data associating viewing direction information about a viewing direction of the character object with blend ratio information about a blend ratio of the plurality of pieces of vertex position specifying data; viewing direction acquisition means for acquiring the viewing direction of the character object; blend ratio information acquisition means for acquiring the blend ratio information corresponding to the viewing direction of the character object, which is acquired by the viewing direction acquisition means, based on the blend control data; vertex position specifying data acquisition means for blending the plurality of pieces of vertex position specifying data based on the blend ratio information acquired by the blend ratio information acquisition means, to thereby acquire the vertex position specifying data corresponding to the viewing direction of the character object acquired by the viewing direction acquisition means; and display control means for displaying the game screen based on the vertex position specifying data, which corresponds to the viewing direction of the character obj ect acquired by the viewing direction acquisition means, acquired by the vertex position specifying data acquisition means.

Further, an information storage medium according to the present invention is a computer-readable information storage medium recording the program. Further, a program delivery device according to the present invention includes an information storage medium recording the program, reads the program from the information storage medium, and delivers the program. A program delivery method according to the present invention is a program delivery method of reading the program from an information storage medium recording the program, and delivering the program.

The present invention relates to a game device which displays a virtual three-dimensional space in which a character object is placed on a game screen. According to the present invention, a plurality of pieces of vertex position specifying data corresponding to a plurality of basic viewing directions are stored. The vertex position specifying data is data for specifying positions of vertexes of a peripheral part of an eye of a character object. According to the present invention, blend control data is stored, which associates viewing direction information about a viewing direction of the character object with blend ratio information about a blend ratio of the plurality of pieces of vertex position specifying data. According to the present invention, the viewing direction of the character object is acquired. The blend ratio information corresponding to the viewing direction of the character object is acquired based on the blend control data. Further, blending the plurality of pieces of vertex position specifying data based on the blend ratio information provides vertex position specifying data corresponding to the viewing direction of the character object. The game screen is then displayed based on the vertex position specifying data. The present invention makes it possible to show how the peripheral part of the eye of the character object changes according to the viewing direction of the character object while reducing the amount of data and the amount of a work for producing data.

Further, according to one aspect of the present invention, one or more skeleton parts related to one or more vertexes of the character object may be set to the character object. One or more positions of the one or more vertexes of the character object which are related to the one or more skeleton parts may change according to a change in a state of the one or more skeleton parts. The vertex position specifying data may indicate the state of one or more skeleton parts in the one or more skeleton parts to which vertexes of the peripheral part of the eye of the character object are related. Further, the display control means may include: motion data storage means for storing motion data indicating the state of the one or more skeleton parts in a case where the character object performs a predetermined motion; means for changing the state of the one or more skeleton parts based on the motion data; and means for replacing a state of a skeleton part to which a vertex of the peripheral part of the eye of the character object is related from a state indicated by the motion data to a state indicated by the vertex position specifying data, which corresponds to the viewing direction of the character obj ect acquired by the viewing direction acquisition means, acquired by the vertex position specifying data acquisition means.

Further, according to another aspect of the present invention, the display control means may include: motion data storage means for storing motion data for specifying a position of each vertex of the character object in a case where the character object performs a predetermined motion; means for changing the position of each vertex of the character object based on the motion data; and means for replacing a position of a vertex of the peripheral part of the eye of the character object from a position specified by the motion data to a position specified by the vertex position specifying data, which corresponds to the viewing direction of the character object acquired by the viewing direction acquisition means, acquired by the vertex position specifying data acquisition means.

BRIEF DESCRIPTION OF THE DRAWINGS

FIG. 1 is a diagram illustrating a hardware configuration of a game device according to an embodiment of the present invention.
FIG. 2 is a diagram illustrating an example of a virtual three-dimensional space.
FIG. 3 is a diagram illustrating an example of a face of a character object.
FIG. 4 is a diagram illustrating a basic viewing direction (Up).
FIG. 5 is a diagram illustrating a basic viewing direction (Down).
FIG. 6 is a diagram illustrating a basic viewing direction (Left).
FIG. 7 is a diagram illustrating a basic viewing direction (Right).
FIG. 8 is a diagram illustrating an example of blend control data.
FIG. 9 is a diagram for describing characteristic amounts $\theta x$ and $\theta y$.
FIG. 10 is a diagram for describing the characteristic amount $\theta x$.
FIG. 11 is a diagram for describing the characteristic amount $\theta y$.
FIG. 12 is a diagram illustrating an example of game status data.
FIG. 13 is a diagram illustrating a process to be carried out by the game device.
FIG. 14 is a diagram illustrating the process to be carried out by the game device.
FIG. 15 is a diagram illustrating an overall configuration of a program delivery system according to another embodiment of the present invention.

BEST MODE FOR CARRYING OUT THE INVENTION

Hereafter, an example of one embodiment of the present invention is described in detail referring to the accompanying drawings. A game device according to the embodiment of the present invention is realized by, for example, a consumer game machine, a portable game machine, a mobile phone, a personal digital assistant (PDA), or a personal computer. The following description is given of a case where the game device according to the embodiment of the present invention is realized by a consumer game machine.

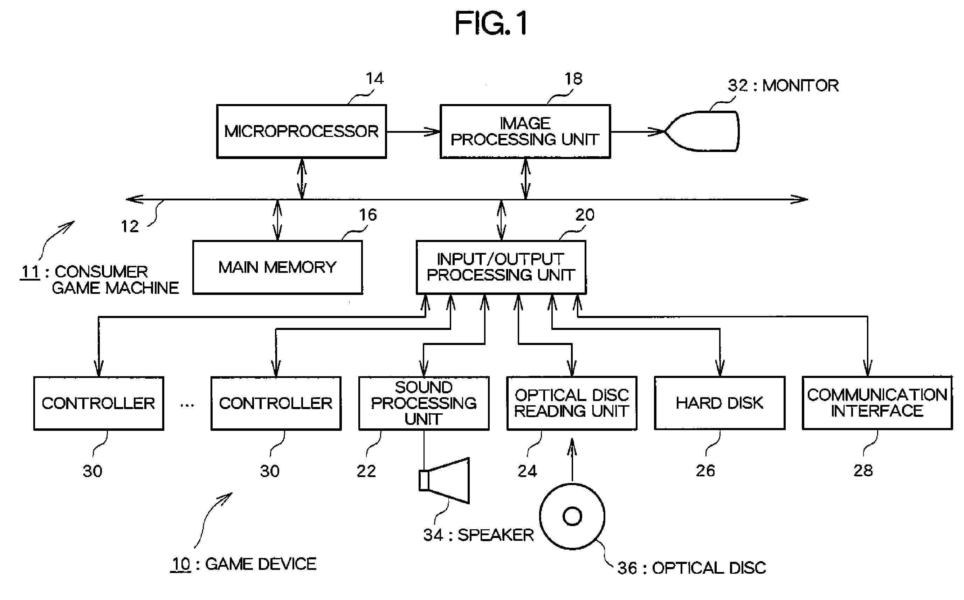

FIG. 1 is a diagram illustrating an overall configuration of the game device according to the embodiment of the present invention. A game device 10 illustrated in FIG. 1 includes a consumer game machine 11, a monitor 32, a speaker 34, and an optical disc 36. The monitor 32 and the speaker 34 are connected to the consumer game machine 11. For example, a home-use television receiver may be used as the monitor 32. For example, a speaker built into the home-use TV receiver may be used as the speaker 34. The optical disc 36 is an information storage medium to be mounted in the consumer game machine 11.
The consumer game machine 11 is a publicly known computer game system. The consumer game machine 11 includes a bus 12, a microprocessor 14, a main memory 16, an image processing unit 18, an input/output processing unit 20, a sound processing unit 22, an optical disc reading unit 24, a hard disk 26, a communication interface 28, and a controller 30. The components other than the controller 30 are accommodated in a casing of the consumer game machine 11.
The bus 12 is used for exchanging addresses and data among the individual components of the consumer game machine 11. The microprocessor 14, the main memory 16, the image processing unit 18, and the input/output processing unit 20 are connected via the bus 12 in a mutually data communicatable manner.
The microprocessor 14 controls the individual components of the consumer game machine 11 based on an operating system stored in a ROM (not shown), and a program and data which are read from the optical disc 36 or the hard disk 26. The main memory 16 includes a RAM, for example. The program and data read from the optical disc 36 or the hard disk 26 are written in the main memory 16 as needed. The main memory 16 is used also as a work memory of the microprocessor 14.
The image processing unit 18, which includes a VRAM, renders a game screen into the VRAM based on image data sent from the microprocessor 14. The image processing unit 18 then converts the game screen rendered in the VRAM into a video signal, and outputs the video signal to the monitor 32 at a predetermined timing.
The input/output processing unit 20 is an interface via which the microprocessor 14 accesses the sound processing unit 22, the optical disc reading unit 24, the hard disk 26, the communication interface 28, and the controller 30. The sound processing unit 22, the optical disc reading unit 24, the hard disk 26, the communication interface 28, and the controller 30 are connected to the input/output processing unit 20.

The sound processing unit 22 includes a sound buffer in which various kinds of sound data read from the optical disc 36 or the hard disk 26, such as game music, game sound effects, and messages, are stored. The sound processing unit 22 reproduces the various kinds of sound data stored in the sound buffer, and outputs the sound data from the speaker 34.

The optical disc reading unit 24 reads the program and data recorded on the optical disc 36 in response to an instruction from the microprocessor 14. While the optical disc 36 is used here to supply a program and data to the consumer game machine 11, another information storage medium, such as a ROM card, may be used. Alternatively, a program and data may be supplied to the consumer game machine 11 from a remote place over a communication network, such as the Internet.

The hard disk 26 is a common hard disk drive (auxiliary storage device). A program and data are stored in the hard disk 26. The communication interface 28 is an interface for establishing cabled or wireless connection of the consumer game machine 11 to a communication network, such as the Internet.

The controller 30 is general-purpose operation input means for a user to input various game operations. The input/output processing unit 20 scans a state of each component of the controller 30 for every given period (for example, every 1/60th of a second). Then, the input/output processing unit 20 sends an operation signal indicating the scanning result to the microprocessor 14 via the bus 12. The microprocessor 14 determines a game operation carried out by a player based on the operation signal. A plurality of the controllers 30 can be connected to the consumer game machine 11. The microprocessor 14 executes game control based on the operation signal input from each controller 30.

The game device 10 with the foregoing configuration executes the game program read from the optical disc 36 or the hard disk 26, whereby a soccer game, for example, is realized.

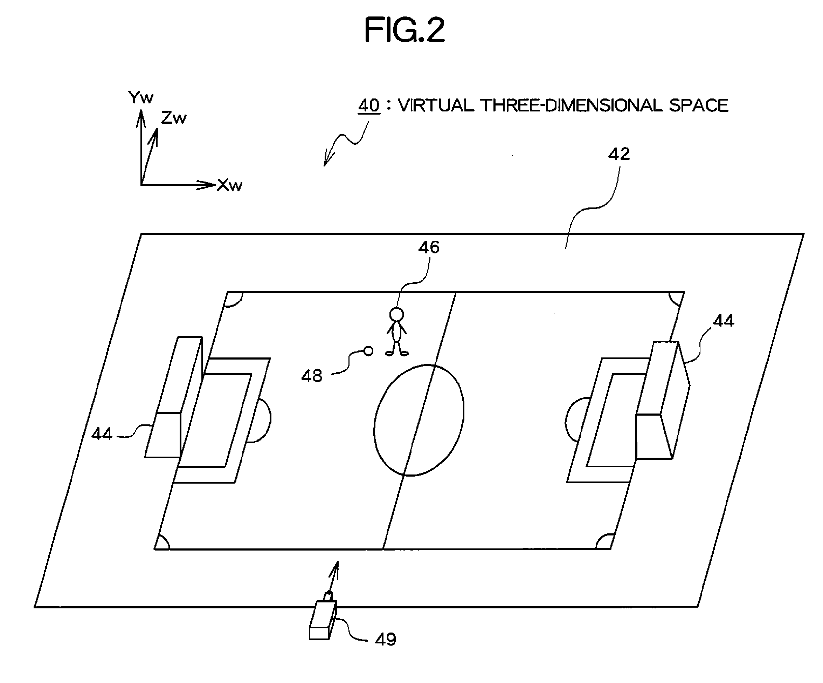

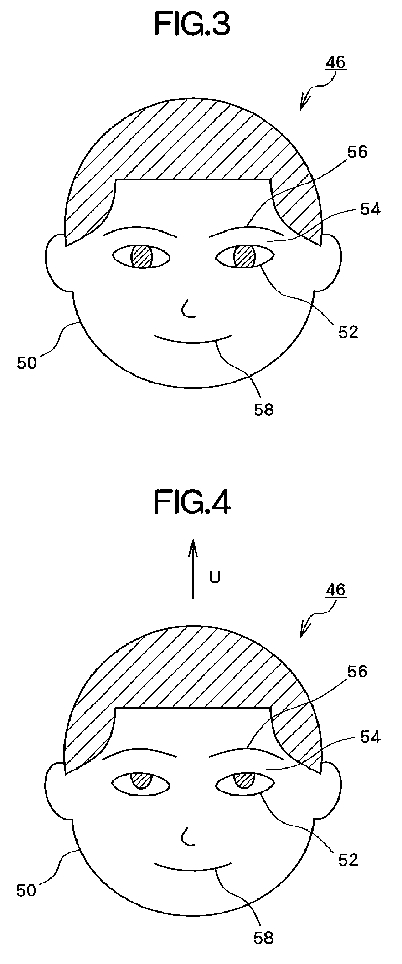

A virtual three-dimensional space is created in the main memory 16 of the game device 10. FIG. 2 illustrates an example of a virtual three-dimensional space 40. As illustrated in FIG. 2, a field for soccer is formed in the virtual three-dimensional space 40. That is, a field object 42 representing a soccer field is placed in the virtual three-dimensional space 40. Goal objects 44 each representing a goal, a character object 46 representing a soccer player, and a ball object 48 representing a soccer ball are placed on the field object 42. Each obj ect includes a plurality of polygons. Although not illustrated in FIG. 2, twenty-two character objects 46 are placed in the virtual three-dimensional space 40. The character object 46 is simplified in FIG. 2. FIG. 3 illustrates an example of a face 50 (head) of the character object 46.

A skeleton is set inside the character object 46. A skeleton includes joints equivalent to joint portions, and bones which connect joints. One or more vertexes of the character object 46 are related to each skeleton part (joint and bone). The position of a vertex related to each skeleton part changes based on a change in the state (position, rotational angle, etc.) of the skeleton part. In order to change the posture or expression of the character object 46, a change is given to the state of each skeleton part. When the state of each skeleton part changes, the vertex that is related to the skeleton part moves according to the change. As a result, the posture and expression of the character object 46 change. A skeleton is used to change the posture and expression of the character object 46.

For example, skeleton parts (hereinafter referred to as "eye-related skeleton parts") related to the vertexes of an eye 52 and the peripheral part of the eye 52 (in other words, portions which show changes according to a change in a viewing direction of the character object 46), skeleton parts related to the vertexes of a mouth 58 and the peripheral part of the mouth 58, and so forth are set on the face 50 (head) of the character object 46. The eye-related skeleton parts include, for example, a joint and/or bone for moving an upper eyelid 54, and a joint and/or bone for moving an eyebrow 56. The states of those joints and/or bones change, whereby the upper eyelid 54 and the eyebrow 56 of the character object 46 move.

A virtual camera 49 is disposed in the virtual three-dimensional space 40. A game screen showing the picture obtained by viewing the virtual three-dimensional space 40 from the virtual camera 49 is displayed on the monitor 32. A user operates a character object 46 as an operation target using the controller 30 while viewing the game screen. The character object 46 to be operated by the user acts according to contents of the user' s operation. The other character objects 46 act according to contents determined by a predetermined algorithm (which is hereafter referred to as an "action decision algorithm").

The following describes technology for allowing the game device 10 to show how the peripheral part of the eye 52 of the character object 46 changes according to the viewing direction of the character object 46 while reducing an amount of data and an amount of the work for producing data.

First, data to be stored in the game device 10 is described. Of data described bellow, the data to be stored in the optical disc 36 may be stored in the hard disk 26.

Model data of each object placed in the virtual three-dimensional space 40 is stored in the optical disc 36. Motion data of the character object 46 is stored in the optical disc 36 (motion data storage means). Motion data is data indicating a change in the position of a vertex of the character object 46 for each frame (for example, every 1/60th of a second) in a case where the character object 46 takes various motions. According to this embodiment, the position of a vertex of the character object 46 is specified by the state (rotational angle, position, etc.) of each skeleton part set for the character object 46. According to this embodiment, therefore, motion data is data indicating a change in the state (rotational angle, position, etc.) of each skeleton part for each frame in a case where the character object 46 performs various motions. Hereafter, changing the state of each skeleton part of the character object 46 according to motion data is referred to as "reproduction of motion data".

Examples of motion data of the character object 46 include motion data in a case where the character object 46 runs, motion data (hereafter referred to as "pass motion data") in a case where the character object 46 makes a pass, motion data (hereafter referred to as "joy motion data") in a case where the character object 46 is happy, and motion data (hereafter referred to as "pain motion data") in a case where the character object 46 shows pain.

Joy motion data is used, for example, in a case of getting a score or in a case of winning a game. The joy motion data includes data indicating a change in the state of each skeleton part of the face 50 of the character object 46 for making the character object 46 have a smiley face. When joy motion data is reproduced, therefore, the character object 46 takes a "joyful action", and the expression of the face 50 of the character object 46 turns into a smiley face. Pain motion data is used, for example, when the character object 46 is tackled by a character object 46 of the opponent team. The pain motion data includes data indicating a change in the state of each skeleton part of the face 50 of the character object 46 for making the character object 46 have a "painful expression". When pain motion data is reproduced, therefore, the character obj ect 46 performs a "painful action", and the expression of the face 50 of the character object 46 turns into a "painful expression".

Data (vertex position specifying data) for specifying the positions of the vertexes of the eye 52 and the peripheral part of the eye 52 of the character object 46 when the character object 46 is looking in each of a plurality of basic viewing directions is stored in the optical disc 36 (vertex position specifying data storage means). As described above, the positions of the vertexes of the eye 52 and the peripheral part of the eye 52 of the character object 46 are specified by the states (rotational angle, position, etc.) of the eye-related skeleton parts of the character object 46. According to this embodiment, therefore, as data for specifying the positions of the vertexes of the eye 52 and the peripheral part of the eye 52 when the character object 46 is looking in a basic viewing direction, data indicating the states (rotational angle, position, etc.) of eye-related skeleton parts when the character object 46 is looking in the basic viewing direction is stored. Hereafter, this data is referred to as "basic state data" of an eye-related skeleton part.

According to this embodiment, the basic state data of an eye-related skeleton part corresponding to each of four basic viewing directions (Up, Down, Left, Right) are stored in the optical disc 36. FIGS. 4 to 7 are diagrams for describing the four basic viewing directions.

FIG. 4 is a diagram illustrating the basic viewing direction (Up). FIG. 4 illustrates the case where the character object 46 is looking directly upward (U direction illustrated in FIG. 4) with the face 50 facing frontward. The basic state data of the eye-related skeleton part corresponding to the basic viewing direction (Up) is data indicating the states (rotational angle, position, etc.) of eye-related skeleton parts when the viewing direction of the character object 46 is directly upward (U direction illustrated in FIG. 4). Hereafter, this basic state data is referred to as "basic state data U".

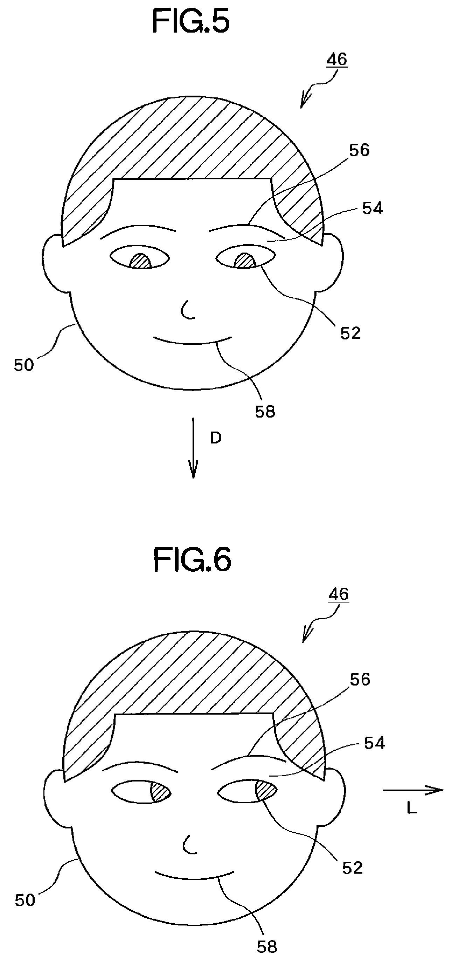

FIG. 5 is a diagram illustrating the basic viewing direction (Down). FIG. 5 illustrates the case where the character object 46 is looking directly downward (D direction illustrated in FIG. 5) with the face 50 facing frontward. The basic state data of the eye-related skeleton part corresponding to the basic viewing direction (Down) is data indicating the states (rotational angle, position, etc.) of eye-related skeleton parts when the viewing direction of the character object 4 6 is directly downward (D direction illustrated in FIG. 5). Hereafter, this basic state data is referred to as "basic state data D".

FIG. 6 is a diagram illustrating the basic viewing direction (Left). FIG. 6 illustrates the case where the character object 46 is looking directly leftward (L direction illustrated in FIG. 6) with the face 50 facing frontward. The basic state data of the eye-related skeleton part corresponding to the basic viewing direction (Left) is data indicating the states (rotational angle, position, etc.) of eye-related skeleton parts when the viewing direction of the character object 46 is directly leftward (Ldirection illustrated in FIG. 6). Hereafter, this basic state data is referred to as "basic state data L".

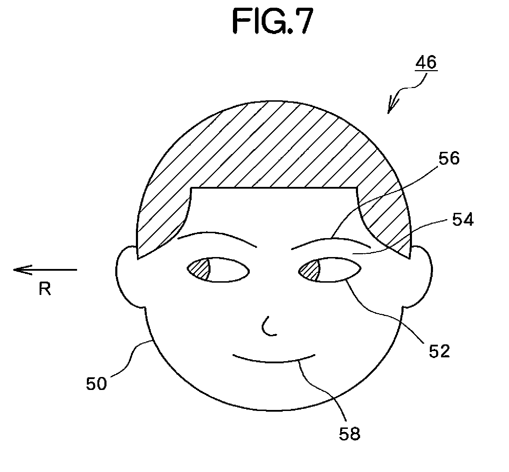

FIG. 7 is a diagram illustrating the basic viewing direction (Right). FIG. 7 illustrates the case where the character object 46 is looking directly rightward (R direction illustrated in FIG. 7) with the face 50 facing frontward. The basic state data of the eye-related skeleton part corresponding to the basic viewing direction (Right) is data indicating the states (rotational angle, position, etc.) of eye-related skeleton parts when the viewing direction of the character object 46 is directly rightward (R direction illustrated in FIG. 7). Hereafter, this basic state data is referred to as "basic state data R".

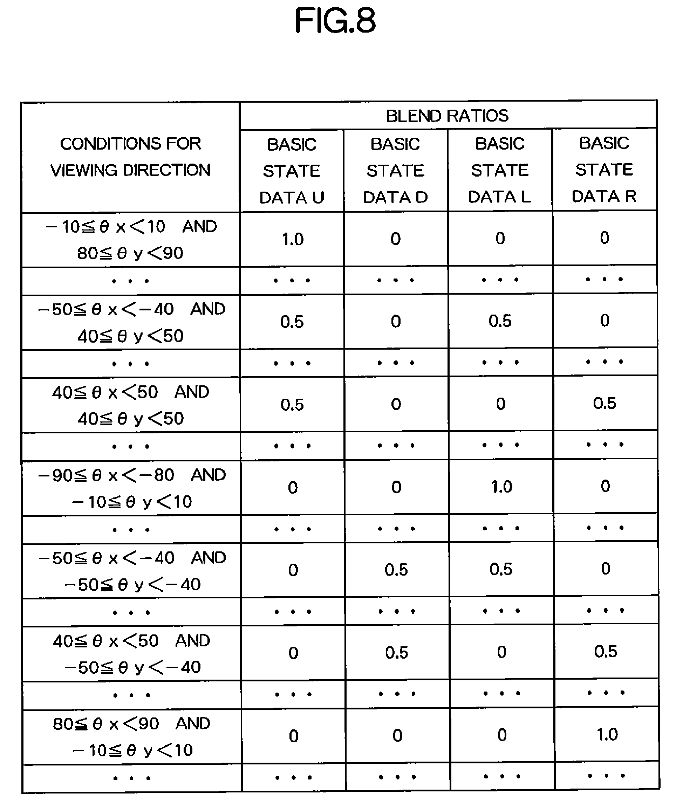

Blend control data is stored in the optical disc 36 (blend control data storage means). Blend control data is data which associates viewing direction information about the viewing direction of the character object 46 with blend ratio information about the blend ratio (composition ratio) in the case of blending (composing) the basic state data U, D, L, and R of an eye-related skeleton part. FIG. 8 illustrates an example of the blend control data. The blend control data illustrated in FIG. 8 is data which associates characteristic amounts $\theta x$ and $\theta y$ (viewing direction information) of the viewing direction of the character object 46 with the blend ratio (blend ratio information) of the basic state data U, D, L, and R of an eye-related skeleton part. The blend control data illustrated in FIG. 8 is data of a table format, and includes a plurality of records. Each record includes a "viewing direction condition" field and the "blend ratio" field. Only typical records (viewing direction conditions and blend ratios) are illustrated in FIG. 8.

The "viewing direction condition" field shows the conditions for the viewing direction of the character object 46. More specifically, the "viewing direction condition" field shows the conditions for the characteristic amounts θx and θy of the viewing direction of the character object 46.

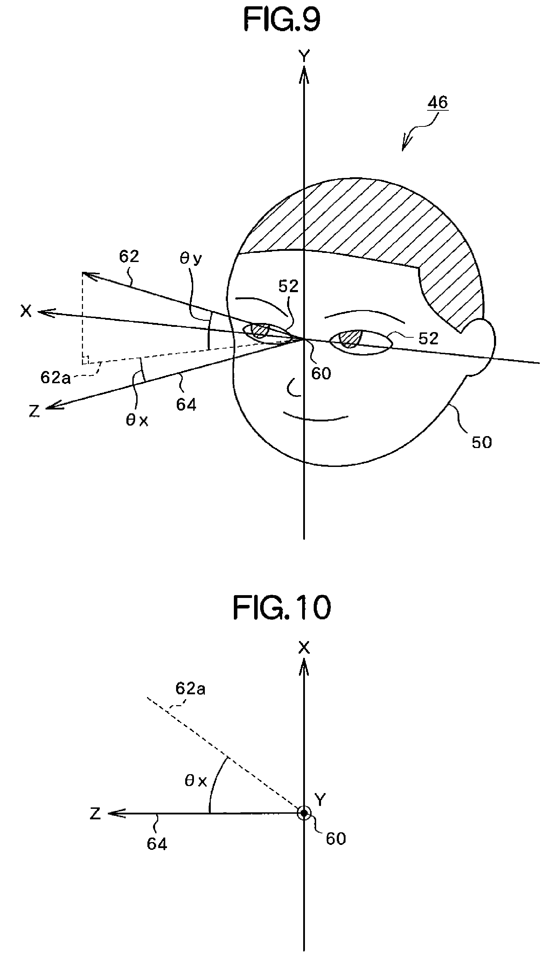

The characteristic amounts θx and θy of the viewing direction of the character object 46 are described below. FIGS. 9 to 11 are diagrams for describing θx and θy. Note that in those diagrams, the X-axis corresponds to the horizontal direction (latitudinal direction) of the face 50 of the character object 46. Namely, the positive X-axial direction corresponds to the R direction illustrated in FIG. 7, and the negative X-axial direction corresponds to the L direction illustrated in FIG. 6. The Y-axis corresponds to the vertical direction (longitudinal direction) of the face 50 of the character object 46. Namely, the positive Y-axial direction corresponds to the direction of U illustrated in FIG. 4, and the negative Y-axial direction corresponds to the D direction illustrated in FIG. 5. The Z-axis corresponds to a frontward direction 64 of the face 50 of the character object 46. Further, reference numeral "60" shows the central point between the left eye 52 and the right eye 52 of the character object 46. In FIG. 9, the starting point of the straight line which shows the viewing direction 62 of the character object 46 is set to the central point 60 between the left eye 52 and the right eye 52.

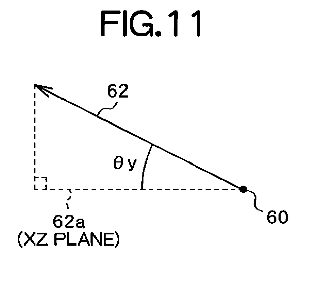

The characteristic amounts θx and θy are angles which indicate deviations between the viewing direction 62 of the character object 46 and the frontward direction 64 of the face 50 of the character object 46. θx is an angle indicating how much the viewing direction 62 of the character object 46 is shifted in the latitudinal direction (X-axial direction) with respect to the frontward direction 64 of the face 50 of the character object 46. More specifically, as illustrated in FIGS. 9 and 10, θx represents an angle between a straight line 62a obtained by projecting the straight line showing the viewing direction 62 on the XZ plane, and the frontward direction 64 (Z-axial direction) of the face 50. Note that when the viewing direction 62 is shifted rightward (positive X-axial direction) of the frontward direction 64 of the face 50, the value of θx becomes a positive value. On the other hand, when the viewing direction 62 is shifted leftward (negative X-axial direction) of the frontward direction 64 of the face 50, the value of θx becomes a negative value. Further, θy is an angle indicating how much the viewing direction 62 of the character object 46 is shifted in the longitudinal direction (Y-axial direction) with respect to the frontward direction 64 of the face 50 of the character object 46. More specifically, as illustrated in FIGS. 9 and 11, θy represents an angle between the viewing direction 62 and the straight line 62a (XZ plane) obtained by projecting the straight line showing the viewing direction 62 on the XZ plane. Note that when the viewing direction 62 is shifted upward (positive Y-axial direction) of the frontward direction 64 of the face 50, the value of θy becomes a positive value. On the other hand, when the viewing direction 62 is shifted downward (negative Y-axial direction) of the frontward direction 64 of the face 50, the value of θy becomes a negative value.

The "blend ratio" field shows the blend ratio in the case of blending the basic state data U, D, L, and R of an eye-related skeleton part.

Blend control data may be data of an equation form. That is, blend control data may be an operational equation for computing the blend ratio of the basic state data U, D, L, and R of an eye-related skeleton part based on the values of θx and θy. Alternatively, blend control data may be data which is a combination of data of a table format and data of an equation form. For example, blend control data may be data in which an operational equation for computing the blend ratio of the basic state data U, D, L, and R of an eye-related skeleton part based on the values of θx and θy is defined for every angle range of θx and θy.

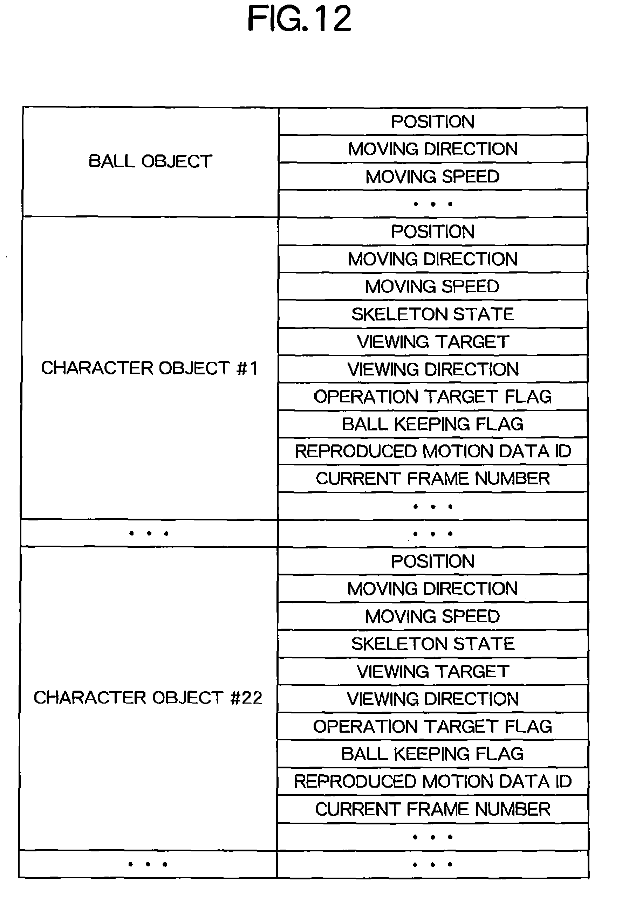

In addition to the above-mentioned data, game status data indicating the current status of the game is stored in the main memory 16. FIG. 12 is a diagram illustrating an example of the data structure of the game status data. The game status data illustrated in FIG. 12 includes data indicating the current states (position, moving direction, moving speed, etc.) of the ball object 48, and data indicating the current state of each character object 46. The data indicating the current state of each character object 46 includes, for example, "position" data, the "moving direction" data, "moving speed" data, "skeleton state" data, "viewing target" data, "viewing direction" data, a "operation target flag", a "ball keeping flag", "reproduced motion data ID", and "current frame number" of the character object 46. The "skeleton state" data is data indicating the states (rotational angle, position, etc.) of each skeleton part. The "viewing target" data is data indicating the target that the character object 46 is looking at. As the viewing target of the character object 46, a predetermined position, the ball object 48, or another character object 46 in the virtual three-dimensional space 40 is set. The "operation target flag" is data indicating whether or not the character object 46 is the user's operation target. The "ball keeping flag" is data indicating whether or not the character object 46 keeps the ball object 48. The "reproduced motion data ID" is data indicating the motion data being reproduced. The "current frame number" is data indicating the current playback position of motion data. Note that although omitted in FIG. 12, the game status data includes, for example, data indicating the progress of the game, such as the score of each team.

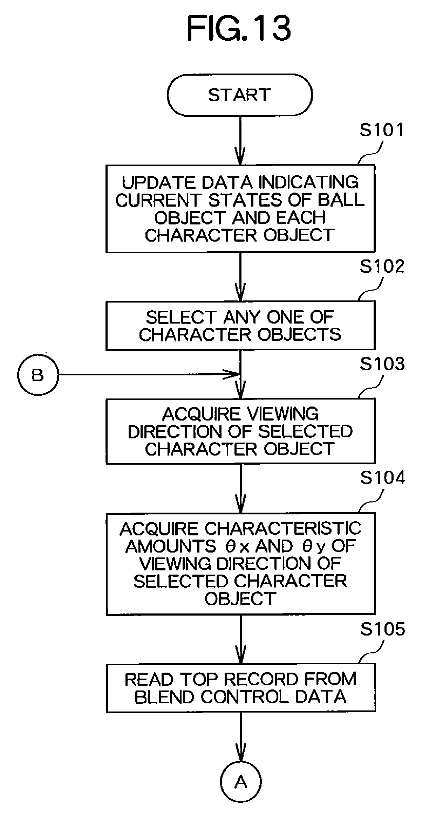

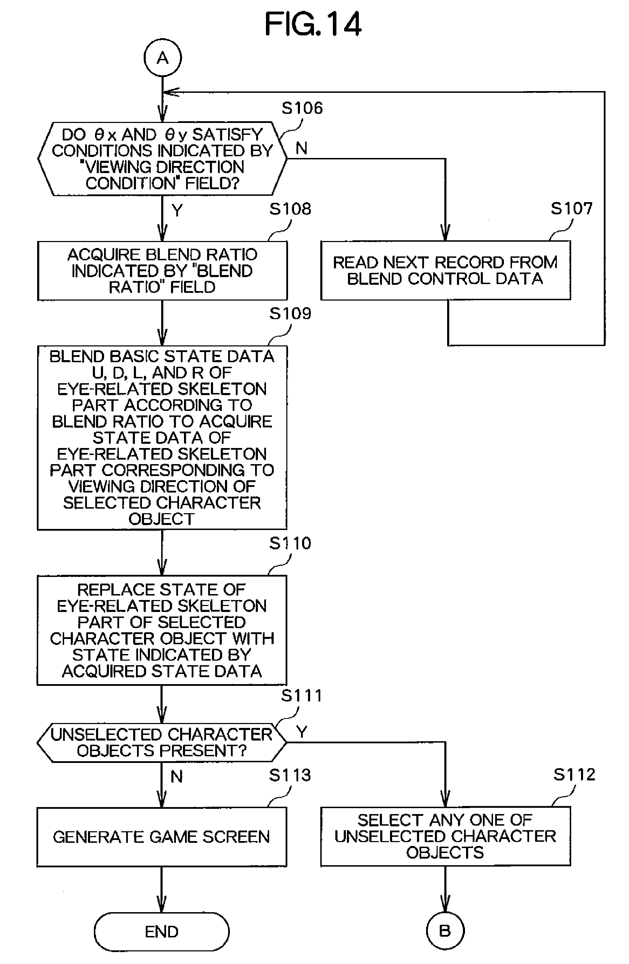

The processing which is executed by the game device 10 is described below. FIGS. 13 and 14 are flowcharts illustrating the process relevant to the present invention in the processes which are executed every predetermined time (for example, 1/50th of a second) by the game device 10. The microprocessor 14 performs processing illustrated in FIGS. 13 and 14 according to the program stored in the optical disc 36 or the hard disk 26.

As illustrated in FIG. 13, first, the microprocessor 14 updates the data indicating the current states of the ball object 48 and each character object 46 included in the game status data (S101).

For example, the microprocessor 14 updates the "position,", the "moving direction", and "moving speed" data of each character object 46 according to the contents of the user's operation, or the decision contents of the action decision algorithm. The microprocessor 14 updates the "position" data or the like of the character object 46, which is to be operated by the user, according to the contents of the user's operation. On the other hand, the microprocessor 14 updates the "position" data or the like of the character obj ect 4 6 which is not the user's operation target according to the decision contents of the action decision algorithm.

Further, for example, the microprocessor 14 updates the "reproduced motion data ID" of each character object 46 according to the contents of the user's operation, or the decision contents of the action decision algorithm. When the user perf o-rms an operation to instruct a pass, for example, the microprocessor 14 sets the ID of pass motion data to the "reproduced motion data ID" of the character object 46 which is the user's operation target. When a score is achieved, for example, the microprocessor 14 sets the ID of joy motion data to the "reproduced motion data ID" of the character object 46 which has made the score. When the character object 46 is tackled, for example, the microprocessor 14 sets the ID of pain motion data to the "reproduced motion data ID". Note that when the "reproduced motion data ID" is updated, the microprocessor 14 initializes the "current frame number" to the head frame number. When one of the character objects 4 6 performs a ball-related operation such as a pass or a shot, the microprocessor 14 updates the "position", "moving direction", and "moving speed" data of the ball object 48, too.

Further, for example, the microprocessor 14 advances the "current frame number" of each character object 46 by one frame.

Further, for example, the microprocessor 14 (display control means) updates the "skeleton state" data of each character object 46 based on "reproduced motion data ID" and the "current frame number". More specifically, the microprocessor 14 acquires the state of each skeleton part in the current frame from the motion data being reproduced. Then, the microprocessor 14 updates the "skeleton state" data of the character object 46 in such a way that the "skeleton state" data shows its acquired state. When the ID of joy motion data is set to the "reproduced motion data ID" of the character object 46, for example, the "skeleton state" data of the character object 46 is updated so that the state of each skeleton part (eye-related skeleton part or the like) of the face 50 of the character object 46 becomes the state in the current frame of the joy motion data. Accordingly, the state indicated by the motion data being reproduced (for example, joy motion data) is held in the "skeleton state" data as the state of an eye-related skeleton part.

Further, for example, the microprocessor 14 updates the "viewing target" data of each character object. For example, the microprocessor 14 selects a predetermined position, the ball object 48, other character objects 46, or the like in the virtual three-dimensional space 40 as a viewing target according to a predetermined algorithm. The viewing target of the character obj ect 46 may be determined every predetermined time, or may be determined when a certain game event takes place.

Thereafter, the microprocessor 14 performs a process for correcting the state of an eye-related skeleton part of each character object 46 (S102 to S112). First, the microprocessor 14 selects one of the character objects 46 (S102). Hereafter, the character object 46 which is selected in S102 or in later S112 is referred to as "selected character object".

Then, the microprocessor 14 (viewing direction acquisition means) acquires the viewing direction 62 of the selected character object (S103). The microprocessor 14 acquires the viewing direction 62 of the selected character object based on the position of the selected character object and the position of the viewing target. For example, the microprocessor 14 acquires the direction from the central point 60 between the right eye 52 and the left eye 52 of the selected character object toward the position of the viewing target as the viewing direction 62. Then, the microprocessor 14 acquires the characteristic amounts $\theta x$ and $\theta y$ (refer to FIGS. 9 to 11) of the viewing direction 62 of the selected character object (S104).

Next, the microprocessor 14 reads a top record from the blend control data (S105). The microprocessor 14 then determines whether or not $\theta x$ and $\theta y$ satisfy the condition which is indicated in the "viewing direction condition" field of the read record (S106). If $\theta x$ and $\theta y$ do not satisfy the condition indicated in the "viewing direction condition" field of the read record, the microprocessor 14 reads the next record from the blend control data (S107). Then, the microprocessor 14 determines whether or not $\theta x$ and $\theta y$ satisfy the condition indicated in the "viewing direction condition" field of the record (S106).

If $\theta x$ and $\theta y$ satisfy the condition indicated in the "viewing direction condition" field of the read record, on the other hand, the microprocessor 14 (blend ratio information acquisition means) acquires the blend ratio indicated in the "blend ratio" field of the read record (S108). Then, the microprocessor 14 (vertex position specifying data acquisition means) blends the basic state data U, D, L, and R of the eye-related skeleton part based on the blend ratio acquired in S108 to acquire state data of the eye-related skeleton part corresponding to the viewing direction 62 acquired in S103 (S109).

In this case, for example, the rotational angle $\theta$ of each skeleton part (joint or bone) corresponding to the viewing direction 62 acquired in S103 is acquired by the following equation (1). In the following equation (1), $\theta u$ represents the rotational angle of the skeleton part that is indicated by the basic state data U. $\theta d$ represents the rotational angle of the skeleton part that is indicated by the basic state data D. $\theta 1$ represents the rotational angle of the skeleton part that is indicated by the basic state data L. θr represents the rotational angle of the skeleton part that is indicated by the basic state data R. Further, αu represents the blend ratio of the basic state data U. αd represents the blend ratio of the basic state data D. αl represents the blend ratio of the basic state data L. αr represents the blend ratio of the basic state data R.

$$\theta=\theta u \ast \alpha u + \theta d \ast \alpha d + \theta l \ast \alpha l + \theta r \ast \alpha r \quad ... \quad (1)$$

For example, the position P of each skeleton part (joint or bone) corresponding to the viewing direction 62 acquired in S103 is acquired by the following equation (2). In the following equation (2), Pu represents the position of the skeleton part that is indicated by the basic state data U. Pd represents the position of the skeleton part that is indicated by the basic state data D. Pl represents the position of the skeleton part that is indicated by the basic state data L. Pr represents the position of the skeleton part that is indicated by the basic state data R. Note that, αu, αd, αl, and αr in the equation (2) are the same as those of the equation (1).

$$P=Pu \ast \alpha u + Pd \ast \alpha d + Pl \ast \alpha l + Pr \ast \alpha r \quad ... \quad (2)$$

After the state data of the eye-related skeleton part corresponding to the viewing direction 62 acquired in S103 is acquired, the microprocessor 14 (display control means) updates the state of the eye-related skeleton part held in the "skeleton state" data of the selected character object based on the acquired state data (S110). More specifically, the microprocessor 14 changes the state of the eye-related skeleton part held in the "skeleton state" data of the selected character object from the state acquired based on motion data in S101 to the state indicated by the state data acquired in S109.

Then, the microprocessor 14 determines whether or not there is any character object 46 which has not yet been selected as a selected character object (S111). If there are character objects 46 which have not yet been selected as a selected character object, the microprocessor 14 selects one of the character objects 46 unselected as a selected character object (S112), and performs the process in S103.

On the other hand, if there is not any character object 46 unselected as a selected character object, i.e., if correction of the state of the eye-related skeleton part of all character objects 46 is completed, the microprocessor 14 and the image processing unit 18 (display control means) generate a game screen showing a picture obtained by viewing the virtual three-dimensional space 40 from the virtual camera 49 in the VRAM based on the game status data stored in the main memory 16 (S113). For example, the microprocessor 14 and the image processing unit 18 compute the position of the vertex of each character object 46 based on the "skeleton state" data of the character object 46. Then, the microprocessor 14 and the image processing unit 18 generate the game screen based the computation result, the "position" data of each character object 46, and the like. The game screen generated in the VRAM is output to the monitor 32 at a given timing to be displayed thereon.

The game device 10 described above can express how the peripheral part of the eye 52 of the character object 46 changes according to the viewing direction of the character object 46.

For example, a case is assumed in which the viewing direction 62 of the character object 46 is shifted to the upper right with respect to the frontward direction 64 of the face 50. More specifically, it is assumed that θx is 45 degrees and θy is 45 degrees. In this case, "0.5", "0", "0", and "0.5" are acquired as the blend ratios of the basic state data U, D, L, and R, respectively (see S108 of FIG. 14). As the basic state data U and the basic state data R are blended at the ratio of 0.5:0.5, the state data of the eye-related skeleton part corresponding to the viewing direction 62 (Upper Right) is acquired (see S109 in FIG. 14). Namely, the state of the eye-related skeleton part when the character object 46 is looking in the basic viewing direction (Up) (see FIG. 4) and the state of the eye-related skeleton part when the character object 46 is looking in the basic viewing direction (Right) (see FIG. 7) are blended at the ratio of 0.5:0.5, and accordingly the state of the eye-related skeleton part corresponding to the viewing direction 62 (Upper Right) is acquired. Then, the state of the eye-related skeleton part of the character object 46 is replaced with the state corresponding to the viewing direction 62 (Upper Right) (S110 of FIG. 14). Further, based on the state of each skeleton part after such replacement is performed, the position of each vertex of the character object 46 is computed (see S113 of FIG. 14). That is, based on the state of the eye-related skeleton part corresponding to the viewing direction 62 (Upper Right), the positions of the vertexes of the eye 52 and the peripheral part of the eye 52 of the character object 46 are computed. Then, based on the computation result, the character object 46 is displayed on the game screen (see S113 of FIG. 14). As a result, the eye 52 and the peripheral part of the eye 52 of the character object 46 displayed on the game screen change according to the viewing direction 62 (Upper Right) of the character object 46.

Another case is assumed, in which, for example, the viewing direction 62 of the character object 46 is shifted to the lower left with respect to the frontward direction 64 of the face 50. More specifically, it is assumed that θx is -45 degrees and θy is -45 degrees. In this case, "0", "0.5", "0.5", and "0" are acquired as the blend ratios of the basic state data U, D, L, and R, respectively (see S108 of FIG. 14). As the basic state data D and the basic state data L are blended at the ratio of 0.5:0.5, the state data of the eye-related skeleton part corresponding to the viewing direction 62 (Lower Left) is acquired (see S109 of FIG. 14). Namely, the state of the eye-related skeleton part when the character object 46 is looking in the basic viewing direction (Down) (see FIG. 5) and the state of the eye-related skeleton part when the character object 46 is looking in the basic viewing direction (Left) (see FIG. 6) are blended at the ratio of 0.5:0.5, and accordingly the state of the eye-related skeleton part corresponding to the viewing direction 62 (Lower Left) is acquired. Then, the state of the eye-related skeleton part of the character object 46 is replaced with the state corresponding to the viewing direction 62 (Lower Left) (S110 of FIG. 14). Further, based on the state of each skeleton part after such replacement is performed, the position of each vertex of the character object 46 is computed (see S113 of FIG. 14). That is, based on the state of the eye-related skeleton part corresponding to the viewing direction 62 (Lower Left), the positions of the vertexes of the eye 52 and the peripheral part of the eye 52 of the character object 46 are computed. Then, based on the computation result, the character object 46 is displayed on the game screen (see S113 of FIG. 14). As a result, the eye 52 and the peripheral part of the eye 52 of the character object 46 displayed on the game screen change according to the viewing direction 62 (Lower Left) of the character object 46.

By the way, the following methods may be available as a method of expressing how the peripheral part of the eye 52 of the character object 46 changes according to the viewing direction 62 of the character object 46. That is, there may be a method of preparing motion data expressing how the peripheral part of the eye 52 of the character object 46 changes according to the viewing direction 62 of the character object 46 for every viewing direction 62 of the character object 46. For example, there may be a method of preparing joy motion data, pain motion data, etc. for every viewing direction 62 of the character object 46. However, the viewing direction 62 of the character object 46 changes according to the positional relationship between the character obj ect 4 6 and a viewing target (for example, a predetermined position, the ball object 48, or another character object 46, or the like in the virtual three-dimensional space 40), and is not restricted to a fixed direction. For that reason, if the above-mentioned method is adopted, a vast amount of motion data as described above has to be prepared. That is, the amount of data and the amount of the work for producing data increase. In this regard, the game device 10 merely requires preparation of the basic state data (e.g., the basic state data U, D, L, and R) of an eye-related skeleton part corresponding to each of a plurality of basic viewing directions and the blend control data (see FIG. 8), whereby it is possible to reduce the amount of data and the amount of the work for producing data.

In the game device 10, after the state of each skeleton part of a character object 46 is updated according to motion data such as joy motion data and pain motion data, only the state of an eye-related skeleton part is replaced. Accordingly, the states of skeleton parts (e.g., skeleton parts to which the vertexes of the mouth 58 and the periphery of the mouth 58 are related) other than the eye-related skeleton parts becomes the state that is determined by the original motion data (e.g., joy motion data, pain motion data, etc.). As a result, for example, the mouth shows the expression intended by the original motion data (smiley face, "painful expression", or the like).

The present invention is not limited to the embodiment described above.

For example, the basic viewing directions are not restricted to the four directions of Up, Down, Left, and Right. For example, the basic viewing directions may be eight directions of Up, Down, Left, Right, Upper Left, Upper Right, Lower Left, and Lower Right.

Further, for example, in S109 of FIG. 14, the microprocessor 14 may blend the "skeleton state" data (see FIG. 12) of the character object 46 at the time and the basic state data U, D, L, and R to acquire the state data of the eye-related skeleton parts corresponding to the viewing direction 62 of the character object 4 6. Namely, the microprocessor 14 may blend the state of eye-related skeleton parts indicated by, for example, joy motion data, pain motion data, or the like and the state indicated by each basic state data U, D, L, and R to acquire the state of the eye-related skeleton parts corresponding to the viewing direction 62 of the character object 46. In this case, the "skeleton state" data of the character object 46 at that time has only to be blended at a fixed ratio. In a case where the blend ratio of the "skeleton state" data of the character object 46 at that time is set to "0.1", for example, the sum of the blend ratios of the basic state data U, D, L, and R becomes "0.9" in the "blend ratio" field of blend control data (see FIG. 8). This allows the expression which is intended by the original motion data (e.g., joy motion data, pain motion data, or the like) to be reflected on the expressions of the eye 52 and the peripheral part of the eye 52 of the character object 46.

For example, instead of the basic state data U, D, L and R of eye-related skeleton parts, basic position data U, D, L and R which indicate the positions of the vertexes of the eye 52 and the peripheral part of the eye 52 when the character object 46 is looking in each of the four basic viewing directions (Up, Down, Left, Right) may be stored in the optical disc 36 or the hard disk 26.

In this case, in S109 of FIG. 14, the microprocessor 14 (vertex position specifying data acquisition means) blends the basic position data U, D, L and R based on the blend ratio acquired in S108 to acquire position data of the vertexes of the eye 52 and the peripheral part of the eye 52 corresponding to the viewing direction 62 of the character object 46. At this time, positions P' of the individual vertexes of the eye 52 and the peripheral part of the eye 52 are computed by the following equation (3). In the following equation (3), Pu' represents the position of the vertex held in the basic position data U, Pd' represents the position of the vertex held in the basic position data D, Pl' represents the position of the vertex held in the basic position data L, and Pr' represents the position of the vertex held in the basic position data R. $\alpha u$, $\alpha d$, $\alpha l$, and $\alpha r$ are the same as those of the equation (1).

$$P' = Pu' * \alpha u + Pd' * \alpha d + Pl' * \alpha l + Pr' * \alpha r \quad \dots \quad (3)$$

In this case, instead of omitting S110 of FIG. 14, in S113 of FIG. 14, the microprocessor 14 and the image processing unit 18 (display control means) may replace the position of the vertexes of the eye 52 and the peripheral part of the eye 52 of the character object 46 with the position indicated by the position data acquired in S109 of FIG. 14. Even in this case, it is possible to express how the peripheral part of the eye 52 of the character object 46 changes according to the viewing direction of the character object 46 while reducing the data amount and the amount of the work for producing data.

For example, the present invention can be adapted to games other than a soccer game.

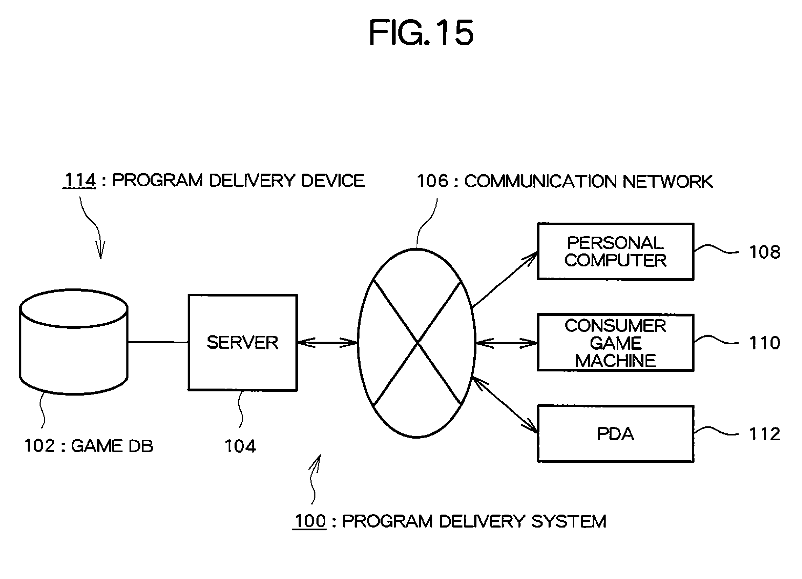

For example, the program is supplied to the consumer game machine 11 from the optical disc 36 as an information storage medium in the foregoing description, but the program may be delivered to a home or the like over a communication network. FIG. 15 is a diagram illustrating an entire configuration of a program delivery system which uses a communication network. A program delivery method according to the present invention is described by referring to FIG. 15. As illustrated in FIG. 15, a program delivery system 100 includes a game database 102, a server 104, a communication network 106, a personal computer 108, a consumer game machine 110, and a personal digital assistant (PDA) 112. Of those components, the game database 102 and the server 104 constitute a program delivery device 114. The communication network 106 includes the Internet or a cable TV network, for example. In this system, the same program as stored in the optical disc 36 is stored in the game database (information storage medium) 102. When a demander makes a game delivery request using the personal computer 108, the consumer game machine 110, the PDA 112 or the like, the request is sent to the server 104 over the communication network 106. The server 104 reads the program from the game database 102 in response to the game delivery request, and transmits the program to the component which has made the game delivery request, such as the personal computer 108, the consumer game machine 110 or the PDA 112. Here, a game is delivered in response to a game delivery request, but the game may be transmitted from the server 104 in a one-way fashion. It is not necessary to deliver all the programs needed to realize a game at once (deliver collectively), and necessary portions may be delivered according to each aspect of the game (split and delivered). The delivery of a game over the communication network 106 in this way can allow the demander to obtain a program easily.

**Claims**

1.  A game device, which displays a virtual three-dimensional space in which a character object is placed on a game screen, **characterized by** comprising:

    vertex position specifying data storage means for storing a plurality of pieces of vertex position specifying data corresponding to a plurality of basic viewing directions, the vertex position specifying data specifying positions of vertexes of a peripheral part of an eye of the character object;
    blend control data storage means for storing blend control data associating viewing direction information about a viewing direction of the character object with blend ratio information about a blend ratio of the plurality of pieces of vertex position specifying data;
    viewing direction acquisition means for acquiring the viewing direction of the character object;
    blend ratio information acquisition means for acquiring the blend ratio information corresponding to the viewing direction of the character object, which is acquired by the viewing direction acquisition means, based on the blend control data;
    vertex position specifying data acquisition means for blending the plurality of pieces of vertex position specifying data based on the blend ratio information acquired by the blend ratio information acquisition means, to thereby acquire the vertex position specifying data corresponding to the viewing direction of the character object acquired by the viewing direction acquisition means; and
    display control means for displaying the game screen based on the vertex position specifying data, which corresponds to the viewing direction of the character object acquired by the viewing direction acquisition means, acquired by the vertex position specifying data acquisition means.

2. A game device according to claim 1, **characterized in that:**

one or more skeleton parts related to one or more vertexes of the character object are set to the character object; one or more positions of the one ormore vertexes of the character object which are related to the one or more skeleton parts changes according to a change in a state of the one or more skeleton parts; the vertex position specifying data indicates the state of one or more skeleton parts in the one or more skeleton parts to which vertexes of the peripheral part of the eye of the character object are related; and the display control means includes:

motion data storage means for storing motion data indicating the state of the one or more skeleton parts in a case where the character object performs a predetermined motion; means for changing the state of the one or more skeleton parts based on the motion data; and means for replacing a state of a skeleton part to which a vertex of the peripheral part of the eye of the character object is related from a state indicated by the motion data to a state indicated by the vertex position specifying data, which corresponds to the viewing direction of the character object acquired by the viewing direction acquisition means, acquired by the vertex position specifying data acquisition means.

3. A game device according to claim 1, **characterized in that** the display control means includes:

motion data storage means for storing motion data for specifying a position of each vertex of the character object in a case where the character object performs a predetermined motion; means for changing the position of each vertex of the character object based on the motion data; and means for replacing a position of a vertex of the peripheral part of the eye of the character object from a position specified by the motion data to a position specified by the vertex position specifying data, which corresponds to the viewing direction of the character object acquired by the viewing direction acquisition means, acquired by the vertex position specifying data acquisition means.

4. A control method for a game device which displays a virtual three-dimensional space in which a character object is placed on a game screen, **characterized by** comprising:

a step of reading storage content of vertex position specifying data storage means storing a plurality of pieces of vertex position specifying data corresponding to a plurality of basic viewing directions, the vertex position specifying data specifying positions of vertexes of a peripheral part of an eye of the character object; a step of reading storage content of blend control data storage means storing blend control data associating viewing direction information about a viewing direction of the character object with blend ratio information about a blend ratio of the plurality of pieces of vertex position specifying data; a viewing direction acquisition step of acquiring the viewing direction of the character object; a blend ratio information acquisition step of acquiring the blend ratio information corresponding to the viewing direction of the character object, which is acquired in the viewing direction acquisition step, based on the blend control data; a vertex position specifying data acquisition step of blending the plurality of pieces of vertex position specifying data based on the blend ratio information acquired in the blend ratio information acquisition step, to thereby acquire the vertex position specifying data corresponding to the viewing direction of the character object acquired in the viewing direction acquisition step; and a display control step of displaying the game screen based on the vertex position specifying data, which corresponds to the viewing direction of the character object acquired in the viewing direction acquisition step, acquired in the vertex position specifying data acquisition step.

5. A program for causing a computer to function as a game device which displays a virtual three-dimensional space in which a character object is placed on a game screen, the program further causing the computer to function as:

vertex position specifying data storage means for storing a plurality of pieces of vertex position specifying data corresponding to a plurality of basic viewing directions, the vertex position specifying data specifying positions of vertexes of a peripheral part of an eye of the character object; blend control data storage means for storing blend control data associating viewing direction information about a viewing direction of the character object with blend ratio information about a blend ratio of the plurality of pieces of vertex position specifying data;

viewing direction acquisition means for acquiring the viewing direction of the character object;

blend ratio information acquisition means for acquiring the blend ratio information corresponding to the viewing direction of the character object, which is acquired by the viewing direction acquisition means, based on the blend control data;

vertex position specifying data acquisition means for blending the plurality of pieces of vertex position specifying data based on the blend ratio information acquired by the blend ratio information acquisition means, to thereby acquire the vertex position specifying data corresponding to the viewing direction of the character object acquired by the viewing direction acquisition means; and

display control means for displaying the game screen based on the vertex position specifying data, which corresponds to the viewing direction of the character object acquired by the viewing direction acquisition means, acquired by the vertex position specifying data acquisition means.

6. A computer-readable information storage medium recording a program for causing a computer to function as a game device which displays a virtual three-dimensional space in which a character object is placed on a game screen, the program further causing the computer to function as:

vertex position specifying data storage means for storing a plurality of pieces of vertex position specifying data corresponding to a plurality of basic viewing directions, the vertex position specifying data specifying positions of vertexes of a peripheral part of an eye of the character object;

blend control data storage means for storing blend control data associating viewing direction information about a viewing direction of the character object with blend ratio information about a blend ratio of the plurality of pieces of vertex position specifying data;

viewing direction acquisition means for acquiring the viewing direction of the character object;

blend ratio information acquisition means for acquiring the blend ratio information corresponding to the viewing direction of the character object, which is acquired by the viewing direction acquisition means, based on the blend control data;

vertex position specifying data acquisition means for blending the plurality of pieces of vertex position specifying data based on the blend ratio information acquired by the blend ratio information acquisition means, to thereby acquire the vertex position specifying data corresponding to the viewing direction of the character object acquired by the viewing direction acquisition means; and

display control means for displaying the game screen based on the vertex position specifying data, which corresponds to the viewing direction of the character object acquired by the viewing direction acquisition means, acquired by the vertex position specifying data acquisition means.

# FIG.1

EP 2 187 356 A1

# FIG.2

40 : VIRTUAL THREE-DIMENSIONAL SPACE

EP 2 187 356 A1

# FIG.3

# FIG.4

# FIG.5

# FIG.6

# FIG.7

# FIG.8

| CONDITIONS FOR VIEWING DIRECTION | BLEND RATIOS | | | |
|---|---|---|---|---|
| | BASIC STATE DATA U | BASIC STATE DATA D | BASIC STATE DATA L | BASIC STATE DATA R |
| $-10 \leqq \theta x < 10$ AND $80 \leqq \theta y < 90$ | 1.0 | 0 | 0 | 0 |
| ・・・ | ・・・ | ・・・ | ・・・ | ・・・ |
| $-50 \leqq \theta x < -40$ AND $40 \leqq \theta y < 50$ | 0.5 | 0 | 0.5 | 0 |
| ・・・ | ・・・ | ・・・ | ・・・ | ・・・ |
| $40 \leqq \theta x < 50$ AND $40 \leqq \theta y < 50$ | 0.5 | 0 | 0 | 0.5 |
| ・・・ | ・・・ | ・・・ | ・・・ | ・・・ |
| $-90 \leqq \theta x < -80$ AND $-10 \leqq \theta y < 10$ | 0 | 0 | 1.0 | 0 |
| ・・・ | ・・・ | ・・・ | ・・・ | ・・・ |
| $-50 \leqq \theta x < -40$ AND $-50 \leqq \theta y < -40$ | 0 | 0.5 | 0.5 | 0 |
| ・・・ | ・・・ | ・・・ | ・・・ | ・・・ |
| $40 \leqq \theta x < 50$ AND $-50 \leqq \theta y < -40$ | 0 | 0.5 | 0 | 0.5 |
| ・・・ | ・・・ | ・・・ | ・・・ | ・・・ |
| $80 \leqq \theta x < 90$ AND $-10 \leqq \theta y < 10$ | 0 | 0 | 0 | 1.0 |
| ・・・ | ・・・ | ・・・ | ・・・ | ・・・ |

# FIG.9

# FIG.10

# FIG.11

62

θy

60

62a
(XZ PLANE)

# FIG.12

| | |
|---|---|
| BALL OBJECT | POSITION |
| | MOVING DIRECTION |
| | MOVING SPEED |
| | ・・・ |
| CHARACTER OBJECT #1 | POSITION |
| | MOVING DIRECTION |
| | MOVING SPEED |
| | SKELETON STATE |
| | VIEWING TARGET |
| | VIEWING DIRECTION |
| | OPERATION TARGET FLAG |
| | BALL KEEPING FLAG |
| | REPRODUCED MOTION DATA ID |
| | CURRENT FRAME NUMBER |
| | ・・・ |
| ・・・ | ・・・ |
| CHARACTER OBJECT #22 | POSITION |
| | MOVING DIRECTION |
| | MOVING SPEED |
| | SKELETON STATE |
| | VIEWING TARGET |
| | VIEWING DIRECTION |
| | OPERATION TARGET FLAG |
| | BALL KEEPING FLAG |
| | REPRODUCED MOTION DATA ID |
| | CURRENT FRAME NUMBER |
| | ・・・ |
| ・・・ | ・・・ |

# FIG.13

```
        ┌─────────────┐
        │    START    │
        └──────┬──────┘
               │                              S101
               ▼
    ┌──────────────────────┐
    │ UPDATE DATA INDICATING│
    │ CURRENT STATES OF BALL│
    │  OBJECT AND EACH      │
    │  CHARACTER OBJECT     │
    └──────────┬───────────┘
               │                              S102
               ▼
    ┌──────────────────────┐
    │  SELECT ANY ONE OF    │
    │  CHARACTER OBJECTS    │
    └──────────┬───────────┘
               │                              S103
    ⓑ ─────────▶│
               ▼
    ┌──────────────────────┐
    │   ACQUIRE VIEWING     │
    │ DIRECTION OF SELECTED │
    │   CHARACTER OBJECT    │
    └──────────┬───────────┘
               │                              S104
               ▼
    ┌──────────────────────┐
    │ ACQUIRE CHARACTERISTIC│
    │ AMOUNTS θx AND θy OF  │
    │  VIEWING DIRECTION OF │
    │ SELECTED CHARACTER    │
    │      OBJECT           │
    └──────────┬───────────┘
               │                              S105
               ▼
    ┌──────────────────────┐
    │  READ TOP RECORD FROM │
    │  BLEND CONTROL DATA   │
    └──────────┬───────────┘
               │
               ▼
              ⓐ
```

# FIG.14

(A)

S106

DO θx AND θy SATISFY CONDITIONS INDICATED BY "VIEWING DIRECTION CONDITION" FIELD?

N

Y

S108

ACQUIRE BLEND RATIO INDICATED BY "BLEND RATIO" FIELD

S107

READ NEXT RECORD FROM BLEND CONTROL DATA

S109

BLEND BASIC STATE DATA U, D, L, AND R OF EYE-RELATED SKELETON PART ACCORDING TO BLEND RATIO TO ACQUIRE STATE DATA OF EYE-RELATED SKELETON PART CORRESPONDING TO VIEWING DIRECTION OF SELECTED CHARACTER OBJECT

S110

REPLACE STATE OF EYE-RELATED SKELETON PART OF SELECTED CHARACTER OBJECT WITH STATE INDICATED BY ACQUIRED STATE DATA

S111

UNSELECTED CHARACTER OBJECTS PRESENT?

Y

N

S113

GENERATE GAME SCREEN

S112

SELECT ANY ONE OF UNSELECTED CHARACTER OBJECTS

END

(B)

# FIG.15

114 : PROGRAM DELIVERY DEVICE   106 : COMMUNICATION NETWORK

102 : GAME DB   104

SERVER

PERSONAL COMPUTER — 108

CONSUMER GAME MACHINE — 110

PDA — 112

100 : PROGRAM DELIVERY SYSTEM

EP 2 187 356 A1

**INTERNATIONAL SEARCH REPORT**

| International application No. |
| --- |
| PCT/JP2008/051822 |

A. CLASSIFICATION OF SUBJECT MATTER
*G06T17/40*(2006.01)i, *A63F13/00*(2006.01)i

According to International Patent Classification (IPC) or to both national classification and IPC

B. FIELDS SEARCHED

Minimum documentation searched (classification system followed by classification symbols)
G06T15/00-17/50, A63F13/00

Documentation searched other than minimum documentation to the extent that such documents are included in the fields searched
Jitsuyo Shinan Koho 1922-1996 Jitsuyo Shinan Toroku Koho 1996-2008
Kokai Jitsuyo Shinan Koho 1971-2008 Toroku Jitsuyo Shinan Koho 1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2004-216169 A (Nintendo Co., Ltd.), 05 August, 2004 (05.08.04), Fig. 1 (Family: none) | 1-6 |
| A | JP 7-85315 A (Hitachi, Ltd.), 31 March, 1995 (31.03.95), Fig. 1 (Family: none) | 1-6 |

☐ Further documents are listed in the continuation of Box C. ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>26 February, 2008 (26.02.08) | Date of mailing of the international search report<br>04 March, 2008 (04.03.08) |
| --- | --- |
| Name and mailing address of the ISA/<br>Japanese Patent Office | Authorized officer |
| Facsimile No. | Telephone No. |

Form PCT/ISA/210 (second sheet) (April 2007)